# EUROPEAN PATENT APPLICATION

(11) **EP 3 163 473 A1**
(43) Date of publication of application: **03.05.2017**
(21) Application number: 16160483.0
(22) Date of filing: 15.03.2016
(51) Int. Cl.: G06F 17/30, H04N 21/482

(54) **VIDEO PLAYING METHOD AND DEVICE**

(30) Priority: 28.10.2015 CN 201510713118
(71) Applicant: Xiaomi Inc., Beijing 100085 (CN)
(72) Inventor: ZHANG, Tao, 100085 BEIJING (CN); CHEN, Zhijun, 100085 BEIJING (CN); LONG, Fei, 100085 BEIJING (CN)
(74) Representative: Cougard, Jean-Marie

(57) **Abstract**

Described is a video playing method and device, which belongs to the technical field of Internet. The method includes: a playing request is received (201), the playing request carrying target object information and the target object information including a target image where a target object is located or a target keyword of the target object; a video segment where the target object is located in a monitoring video is determined (202) on the basis of the target object information; and the video segment is sent (203) to a terminal to enable the terminal to play the video segment.

## Description

### TECHNICAL FIELD

The disclosure generally relates to the technical field of Internet, and more particularly, to a video playing method and device.

### BACKGROUND

Along with popularization of cameras, real-time monitoring with a camera becomes more and more popular. A monitoring video obtained by real-time monitoring with a camera is temporally continuous, so that a user is usually required to manually regulate a playing progress of the monitoring video to forward or reverse the monitoring video to a video picture where a specific object is located to check a behavior of the specific object when the user wants to check the behavior of the specific object in the monitoring video, for example, when the user wants to check a behavior of a baby in the monitoring video. Such operation of manually regulating the playing progress of the monitoring video by the user is relatively tedious, and reduces video playing efficiency. Therefore, there is an urgent need for a video playing method capable of improving video playing efficiency.

### SUMMARY

Accordingly, the disclosure provides a video playing method and device, in accordance with claims which follow.

According to a first aspect of the embodiment of the disclosure, there is provided a video playing method, including:
a playing request is received, the playing request carrying target object information and the target object information including a target image where a target object is located or a first target keyword of the target object;
a video segment where the target object is located in a video is determined on the basis of the target object information; and
the video segment is sent to a terminal to enable the terminal to play the video segment.

In a particular example, the video is a monitoring video.

In the embodiment of the disclosure, a server receives the playing request, the playing request carrying the target object information, and the server determines the video segment where the target object is located in the video on the basis of the target object information, and sends the video segment to the terminal, so that the terminal may directly play the video segment where the target object exists in the video, and is not required to play video segments where objects other than the target object are located in the video, thereby avoiding the phenomenon that a user manually regulates playing of the video to view the video where the target object is located, simplifying the video playing operation, and improving video playing efficiency.

According to an exemplary embodiment, the step that the video segment where the target object is located in the video is determined on the basis of the target object information may include that:
when the target object information includes the target image where the target object is located, a target category of the target object is determined on the basis of a specified classification model and the target image;
a second target keyword of the target object is determined on the basis of the target category; and
the video segment where the target object is located in the video is determined on the basis of the second target keyword.

According to an exemplary embodiment, the step that the video segment where the target object is located in the video is determined on the basis of the target object information may include that:
at least one frame of video image where the target object is located in the video is acquired on the basis of the first target keyword corresponding to the target object information and a stored index library; and
the video segment where the target object is located in the video is formed from the at least one frame of video image.

According to an exemplary embodiment, the step that the at least one frame of video image where the target object is located in the video is acquired on the basis of the target keyword corresponding to the target object information and the stored index library may include that:
when correspondences between keywords and monitoring time points are stored in the index library, at least one monitoring time point is acquired from the correspondences between keywords and monitoring time points on the basis of the first target keyword corresponding to the target object information; and
the at least one frame of video image is acquired from the video on the basis of the at least one monitoring time point.

According to an exemplary embodiment, the step that the at least one frame of video image where the target object is located in the video is acquired on the basis of the target keyword corresponding to the target object information and the stored index library may include that:
when correspondences between keywords and video images are stored in the index library, the at least one frame of video image is acquired from the correspondences between keywords and video images on the basis of the first target keyword corresponding to the target object information.

According to an exemplary embodiment, before the step that the at least one frame of video image where the target object is located in the video is acquired on the basis of the target keyword corresponding to the target object information and the stored index library, the method may further include that:
the video is acquired;
for each frame of video image in the video, an object category of an object included in the video image is determined on the basis of a specified classification model;
a keyword of the object included in the video image is determined on the basis of the object category; and
the index library is generated on the basis of the keyword and the video.

According to an exemplary embodiment, the step that the keyword of the object included in the video image is determined on the basis of the object category may include that:
when the object category is of a person, face recognition is performed on the object included in the video image to obtain a face characteristic;
a corresponding Identity (ID) is acquired from stored correspondences between face characteristics and IDs on the basis of the face characteristic; and
the ID is determined as the keyword of the object included in the video image.

According to an exemplary embodiment, the step that the index library is generated on the basis of the keyword and the video may include that:
a monitoring time point where the video image is located is determined in the video; and
the keyword and the monitoring time point are stored in the correspondences between keywords and monitoring time points in the index library.

According to an exemplary embodiment, the step that the index library is generated on the basis of the keyword and the video may include that:
the keyword and the video image are stored in the correspondences between keywords and video images in the index library.

According to a second aspect of the embodiment of the disclosure, there is provided a video playing device, including:
a receiving module, configured to receive a playing request, the playing request carrying target object information, said target object information including a target image where a target object is located or a first target keyword of the target object;
a determination module, configured to determine a video segment where the target object is located in a video on the basis of the target object information; and
a sending module, configured to send the video segment to a terminal to enable the terminal to play the video segment.

The advantages and technical effects of the device according to the invention correspond to those of the method presented above.

According to a particular embodiment, the determination module may include:
a first determination unit, configured to, when the target object information includes the target image where the target object is located, determine a target category of the target object on the basis of a specified classification model and the target image;
a second determination unit, configured to determine a second target keyword of the target object on the basis of the target category; and
a third determination unit, configured to determine the video segment where the target object is located in the video on the basis of the second target keyword.

According to a particular embodiment, the determination module may include:
a first acquisition unit, configured to acquire at least one frame of video image where the target object is located in the video on the basis of the first target keyword corresponding to the target object information and a stored index library; and
a forming unit, configured to form the video segment where the target object is located in the video from the at least one frame of video image.

According to a particular embodiment, the first acquisition unit may include:
a first acquisition subunit, configured to, when correspondences between keywords and monitoring time points are stored in the index library, acquire at least one monitoring time point from the correspondences between keywords and monitoring time points on the basis of the first target keyword corresponding to the target object information; and
a second acquisition subunit, configured to acquire the at least one frame of video image from the video on the basis of the at least one monitoring time point.

According to a particular embodiment, the first acquisition unit may include:
a third acquisition subunit, configured to, when correspondences between keywords and video images are stored in the index library, acquire the at least one frame of video image from the correspondences between keywords and video images on the basis of the first target keyword corresponding to the target object information.

According to a particular embodiment, the determination module may further include:
a second acquisition unit, configured to acquire the video;
a fourth determination unit, configured to, for each frame of video image in the video, determine an object category of an object included in the video image on the basis of a specified classification model;
a fifth determination unit, configured to determine a keyword of the object included in the video image on the basis of the object category; and
a generation unit, configured to generate the index library on the basis of the keyword and the video.

According to a particular embodiment, the fifth determination unit may include:
a recognition subunit, configured to, when the object category is of a person, perform face recognition on the object included in the video image to obtain a face characteristic;
a fourth acquisition subunit, configured to acquire a corresponding ID from stored correspondences between face characteristics and IDs on the basis of the face characteristic; and
a first determination subunit, configured to determine the ID as the keyword of the object included in the video image.

According to a particular embodiment, the generation unit may include:
a second determination subunit, configured to determine a monitoring time point where the video image is located in the video; and
a first storage subunit, configured to store the keyword and the monitoring time point in the correspondences between keywords and monitoring time points in the index library.

According to a particular embodiment, the generation unit may include:
a second storage subunit, configured to store the keyword and the video image in the correspondences between keywords and video images in the index library.

According to a third aspect of the embodiment of the disclosure, there is provided a video playing device, including:
a processor; and
a memory for storing instructions executable by the processor,
wherein the processor may be configured to:
   receive a playing request, the playing request carrying target object information and the target object information including a target image where a target object is located or a first target keyword of the target object;
   determine a video segment where the target object is located in a video on the basis of the target object information; and
   send the video segment to a terminal to enable the terminal to play the video segment.

In one particular embodiment, the steps of the video playing method are determined by computer program instructions.

Consequently, according to a fourth aspect, the disclosure is also directed to a computer program for executing the steps of a video playing method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an implementation environment involved in a video playing method according to an exemplary embodiment.
Fig. 2 is a flow chart showing a video playing method according to an exemplary embodiment.
Fig. 3 is a flow chart showing another video playing method according to an exemplary embodiment.
Fig. 4 is a block diagram of a video playing device according to an exemplary embodiment.
Fig. 5 is a block diagram of a determination module according to an exemplary embodiment.
Fig. 6 is a block diagram of another determination module according to an exemplary embodiment.
Fig. 7 is a block diagram of a first acquisition unit according to an exemplary embodiment.
Fig. 8 is a block diagram of yet another determination module according to an exemplary embodiment.
Fig. 9 is a block diagram of a fifth determination unit according to an exemplary embodiment.
Fig. 10 is a block diagram of a generation unit according to an exemplary embodiment.
Fig. 11 is a block diagram of another video playing device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to present disclosure as recited in the appended claims.

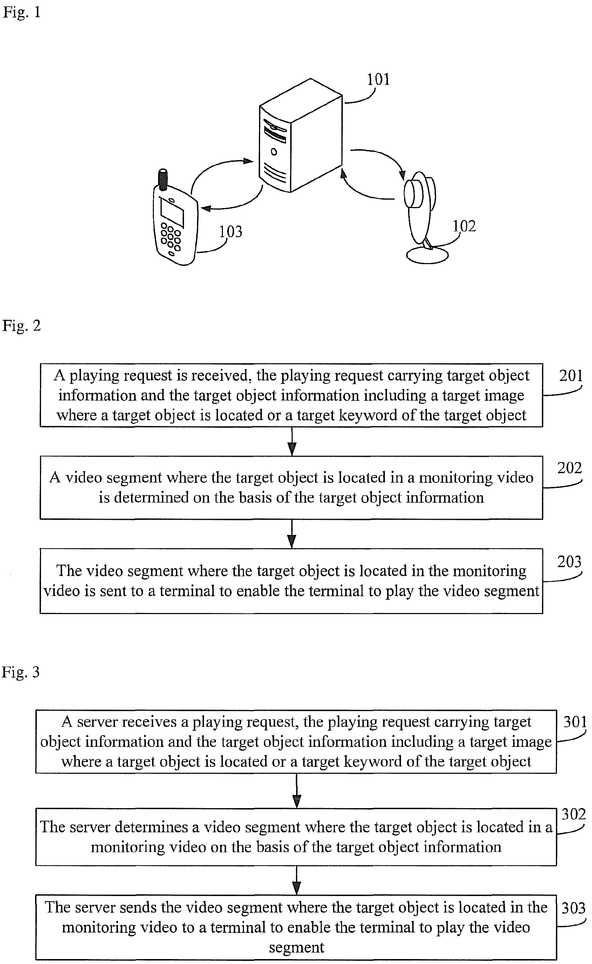

Fig. 1 is a schematic diagram illustrating an implementation environment involved in a video playing method according to an exemplary embodiment. As shown in Fig. 1, the implementation environment may include: a server 101, an intelligent camera equipment 102 and a terminal 103. The server 101 may be a server, may also be a server cluster consisting of a plurality of servers, and may further be a cloud computing service center, the intelligent camera equipment 102 may be an intelligent camera, and the terminal 103 may be a mobile phone, a computer, a tablet and the like. The server 101 may be connected with the intelligent camera equipment 102 through a network, and the server 101 may also be connected with the terminal 103 through the network. The server 101 is configured to receive a playing request sent by the terminal, acquire a corresponding video on the basis of the playing request and send the video to the terminal. The intelligent camera equipment 102 is configured to acquire a monitoring video in a monitoring area and send the monitoring video to the server. The terminal 103 is configured to receive the video sent by the server and play the video.

Fig. 2 is a flow chart showing a video playing method according to an exemplary embodiment. As shown in Fig. 2, the method is applied to a server, and includes the following steps:
Step 201: a playing request is received, the playing request carrying target object information and the target object information including a target image where a target object is located or a target keyword of the target object;
Step 202: a video segment where the target object is located in a video is determined on the basis of the target object information; and
Step 203: the video segment where the target object is located in the monitoring video is sent to a terminal to enable the terminal to play the video segment.

In a particular example, the video is a monitoring video. In the embodiments described hereinafter, the video will thus be referred to as "monitoring video", although other embodiments can be contemplated in accordance with the present disclosure.

In the embodiment of the disclosure, the server receives the playing request, the playing request carrying the target object information, and the server determines the video segment where the target object is located in the monitoring video on the basis of the target object information, and sends the video segment to the terminal, so that the terminal may directly play the video segment where the target object exists in the monitoring video, and is not required to play video segments where objects other than the target object are located in the monitoring video, thereby avoiding the phenomenon that a user manually regulates playing of the monitoring video to view the video where the target object is located, simplifying the video playing operation, and improving video playing efficiency.

In another embodiment of the disclosure, the step that the video segment where the target object is located in the monitoring video is determined on the basis of the target object information includes that:
when the target object information includes the target image where the target object is located, a target category of the target object is determined on the basis of a specified classification model and the target image;
a target keyword of the target object is determined on the basis of the target category; and
the video segment where the target object is located in the monitoring video is determined on the basis of the determined target keyword.

In this particular embodiment, the server determines a target category of the target object on the basis of the specified classification model and the target image, and determines the target keyword of the target object on the basis of the determined target category, so that the server may rapidly determine the video segment where the target object is located in the monitoring video on the basis of the target keyword.

In another embodiment of the disclosure, the step that the video segment where the target object is located in the monitoring video is determined on the basis of the target object information includes that:
at least one frame of video image where the target object is located in the monitoring video is acquired on the basis of the target keyword corresponding to (or comprised in) the target object information and a stored index library; and
the video segment where the target object is located in the monitoring video is formed from the at least one frame of video image.

The terminal sends the playing request to acquire the video segment where the target object is located in the monitoring video, and the video segment may be formed based on the at least one frame of video image, so that the server may rapidly acquire the at least one frame of video image where the target object is located in the monitoring video on the basis of the target keyword and the stored index library, and video acquisition efficiency is improved.

In another embodiment of the disclosure, the step that the at least one frame of video image where the target object is located in the monitoring video is acquired on the basis of the target keyword corresponding to the target object information and the stored index library includes that:
when correspondences between keywords and monitoring time points are stored in the index library, at least one monitoring time point is acquired from the correspondences between keywords and monitoring time points on the basis of the target keyword corresponding to (or comprised in) the target object information; and
the at least one frame of video image is acquired from the monitoring video on the basis of the at least one monitoring time point.

The monitoring video includes monitoring time points corresponding to each frame of video image included in the monitoring video, so that the server may determine the at least one monitoring time point corresponding to the target keyword, and acquire the at least one frame of video image corresponding to the at least one monitoring time point from the monitoring video, and video image acquisition accuracy is improved.

In another embodiment of the disclosure, the step that the at least one frame of video image where the target object is located in the monitoring video is acquired on the basis of the target keyword corresponding to the target object information and the stored index library includes that:
when correspondences between keywords and video images are stored in the index library, the at least one frame of video image is acquired from the correspondences between keywords and video images on the basis of the target keyword corresponding to (or comprised in) the target object information.

Wherein, the server directly acquires the at least one frame of video image corresponding to the target object on the basis of the target keyword, so that video image acquisition efficiency is improved.

In another embodiment of the disclosure, before the step that the at least one frame of video image where the target object is located in the monitoring video is acquired on the basis of the target keyword corresponding to the target object information and the stored index library, the method further includes that:
the monitoring video is acquired;
for each frame of video image in the monitoring video, an object category of an object included in the video image is determined on the basis of a specified classification model;
a keyword of the object included in the video image is determined on the basis of the object category; and
the index library is generated on the basis of the determined keyword and the monitoring video.

Wherein, the server generates the index library on the basis of the keyword and the monitoring video, so that the server may rapidly acquire the at least one frame of video image where the target object is located in the monitoring video on the basis of the index library when receiving the playing request, and the video image acquisition efficiency is improved.

In another embodiment of the disclosure, the step that the keyword of the object included in the video image is determined on the basis of the object category includes that:
when the object category is of a person, face recognition is performed on the object included in the video image to obtain a face characteristic;
a corresponding ID is acquired from stored correspondences between face characteristics and IDs on the basis of the face characteristic; and
the ID is determined as the keyword of the object included in the video image.

Wherein, when the object category is of a person, the server determines the ID of the object as the target keyword of the object, so that the terminal may acquire the at least one frame of video image where a person with a specific identity is located in the monitoring video and pertinently acquire a video segment of a certain person.

In another embodiment of the disclosure, the step that the index library is generated on the basis of the keyword and the monitoring video includes that:
a monitoring time point where the video image is located is determined in the monitoring video; and
the keyword and the monitoring time point are stored in the correspondences between keywords and monitoring time points in the index library.

The monitoring video includes the monitoring time points corresponding to each frame of video image, and the server stores the keyword and the monitoring time point in the correspondences between keywords and monitoring time points in the index library, so that the server may acquire the corresponding monitoring time point on the basis of the keyword to further acquire the video image corresponding to the monitoring time point from the monitoring video, and the video image acquisition accuracy is improved.

In another embodiment of the disclosure, the step that the index library is generated on the basis of the keyword and the monitoring video includes that:
the keyword and the video image are stored in the correspondences between keywords and video images in the index library.

Wherein, the server stores the keyword and the video image in the correspondences between keywords and video images in the index library, so that the server may directly acquire the corresponding video image on the basis of the keyword, and the video image acquisition efficiency is improved.

All the above-mentioned optional technical solutions may be freely combined to form optional embodiments of the disclosure, and will not be elaborated one by one in the embodiment of the disclosure.

Fig. 3 is a flow chart showing another video playing method according to an exemplary embodiment. As shown in Fig. 3, the method includes the following steps.

Step 301: a server receives a playing request, the playing request carrying target object information and the target object information including a target image where a target object is located or a target keyword of the target object.

It is to be noted that the playing request may be directly sent by a terminal, and of course, the playing request may also be sent to other equipment by the terminal, and then is sent to the server by the other equipment. There are no limits specifically made in the embodiment of the disclosure.

In addition, when the terminal sends the playing request, the terminal may send the playing request to the server or the other equipment when receiving a playing instruction.

It is to be noted that the playing instruction is configured to acquire a video segment where the target object is located in a monitoring video, the playing instruction may be triggered by a user, the user may trigger the playing instruction through specified operation, and the specified operation may be clicking operation, swipe operation, voice operation and the like. There are no limits specifically made in the embodiment of the disclosure.

In addition, the target image is an image including the target object, the target image may be a photo of the target object, or is an image carrying the target object in a selection instruction when the terminal receives the selection instruction on the basis of a video image of the monitoring video in a process of playing the monitoring video, and of course, the target image may also be acquired in another manner. There are no limits specifically made in the embodiment of the disclosure.

Moreover, the target keyword uniquely corresponds to the target object, and the target keyword may be a category of the target object, an ID of the target object and the like, which is not specifically made in the embodiment of the disclosure.

Step 302: the server determines the video segment where the target object is located in the monitoring video on the basis of the target object information.

The target object information includes the image where the target object is located or the target keyword of the target object, so that there may be the following two manners for the server to determine the video segment where the target object is located in the monitoring video on the basis of the target object information according to different contents included in the target object information.

Manner 1: at least one frame of video image where the target object is located in the monitoring video is acquired on the basis of the target keyword corresponding to (or comprised in) the target object information and a stored index library, and the video segment where the target object is located in the monitoring video is formed from the at least one frame of video image.

The terminal sends the playing request to acquire the video segment where the target object is located in the monitoring video, and the video segment may be formed from the at least one frame of video image, so that the server may acquire the at least one frame of video image where the target object is located in the monitoring video, and form the video segment where the target object is located in the monitoring video from the at least one frame of video image.

It is to be noted that when the target object information includes the target keyword, the target keyword corresponding to the target object information may be the target keyword included in the target object information, and when the target object information includes the target image, the target keyword corresponding to the target object information may be acquired through the target image.

Wherein, when the server acquires the at least one frame of video image where the target object is located in the monitoring video on the basis of the target keyword and the stored index library, if correspondences between keywords and monitoring time points are stored in the index library, the server acquires at least one monitoring time point from the correspondences between keywords and monitoring time points on the basis of the target keyword, and acquires the at least one frame of video image from the monitoring video on the basis of the at least one monitoring time point. Or, when correspondences between keywords and video images are stored in the index library, the server acquires the at least one frame of video image from the correspondences between keywords and video images on the basis of the target keyword.

Since the monitoring video includes monitoring time points corresponding to each frame of video image included in the monitoring video, the server may acquire the at least one frame of video image corresponding to the at least one monitoring time point from the monitoring video on the basis of the at least one monitoring time point after acquiring the at least one monitoring time point corresponding to the target keyword from the correspondences between keywords and monitoring time points on the basis of the target keyword.

Wherein, a process of acquiring the at least one frame of video image from the monitoring video on the basis of the at least one monitoring time point by the server may refer to the related technology, and will not be elaborated in detail in the embodiment of the disclosure.

For example, when the correspondences between keywords and monitoring time points are stored in the index library, if the target keyword is Yang Lele, the server may acquire at least one monitoring time point 2015/02/03-21:08:31, 2015/03/05-11:08:11 and 2015/08/03-09:05:31 corresponding to Yang Lele from the correspondences, as shown in Table 1, between keywords and monitoring time points on the basis of the target keyword Yang Lele, and then the server may acquire video images respectively corresponding to 2015/02/03-21:08:31, 2015/03/05-11:08:11 and 2015/08/03-09:05:31 from the monitoring video.

**Table 1**

| Keyword | Monitoring time point |
|---|---|
| Yang Lele | 2015/02/03-21:08:31, 2015/03/05-11:08:11 and 2015/08/03-09:05:31 |
| Guo Jie | 2015/05/13-21:10:02, 2015/05/25-21:03:06 and 2015/08/11-19:18:26 |
| ...... | ...... |

It is to be noted that description is made in the embodiment of the disclosure only with the correspondences, as shown in Table 1, between keywords and monitoring time points, and Table 1 is not intended to form limits to the embodiment of the disclosure. For another example, when the correspondences between keywords and video images are stored in the index library, if the target keyword is Yang Lele, the server may acquire at least one frame of video image 1.JPEG, 2.JPEG and 3.JPEG corresponding to Yang Lele from the correspondences, as shown in Table 2, between keywords and video images on the basis of the target keyword Yang Lele.

**Table 2**

| Keyword | Video image |
|---|---|
| Yang Lele | 1.JPEG, 2.JPEG and 3.JPEG |
| Guo Jie | 1.JPEG, 2.JPEG and 3.JPEG |
| ...... | ...... |

It is to be noted that description is made in the embodiment of the disclosure only with the correspondences, as shown in Table 2, between keywords and video images, and Table 2 is not intended to form limits to the embodiment of the disclosure.

Wherein, a process of forming the video segment where the target object is located in the monitoring video by the at least one frame of video image by the server may refer to the related technology, and will not be elaborated in detail in the embodiment of the disclosure.

Furthermore, before acquiring the at least one frame of video image of the target object in the monitoring video on the basis of the target keyword and the stored index library, the server may further generate the index library by Step (1) to (4), including:

### (1) the server acquires a monitoring video.

It is to be noted that the server may acquire the monitoring video from intelligent camera equipment, and of course, the intelligent camera equipment may also send the monitoring video to other equipment, and then the server may acquire the monitoring video from the other equipment. There are no limits specifically made in the embodiment of the disclosure.

Wherein, the intelligent camera equipment is configured to acquire the monitoring video in a monitoring area, and a process of acquiring the monitoring video in the monitoring area by the intelligent camera equipment may refer to the related technology, and will not be elaborated in the embodiment of the present disclosure.

In addition, the intelligent camera equipment may communicate with the server or the other equipment through a wired network or a wireless network, and when the intelligent camera equipment communicates with the server or the other equipment through the wireless network, the intelligent camera equipment may communicate with the server or the other equipment through a built-in Wireless Fidelity (WIFI) communication chip, a BlueTooth (BT) communication chip or another wireless communication chip. There are no limits specifically made in the embodiment of the present disclosure.

### (2) For each frame of video image in the monitoring video, the server determines an object category of an object included in the video image on the basis of a specified classification model.

It is to be noted that the specified classification model is configured to determine an object category corresponding to an image, and the specified classification model may be pre-established.

The specified classification model may be pre-established, and for improving object category determination efficiency, the specified classification model may usually process an image in a preset size to determine an object category of an object included in the image. Therefore, when the server determines the object category of the object included in the video image on the basis of the specified classification model, the server may cut an area where the object is located to obtain an object image, process a size of the object image into the preset size and determine the object category of the object on the basis of the specified classification model and the processed object image.

Wherein, when cutting the area where the object is located in the video image of the monitoring video to obtain the object image, the server may intercept an external rectangle of the object in the video image whether the object is located and determine the external rectangle as an image area, i.e. the object image, where the object is located in the monitoring video. Of course, other manners may also be adopted for the server to cut the area where the object is located to obtain the object image, which is not specifically limited in the embodiment of the disclosure.

In addition, the preset size may be preset, and for example, the preset size may be a 224*224 pixel, a 300*300 pixel and the like, which is not specifically limited in the embodiment of the disclosure.

It is to be noted that a process of determining the object category of the object on the basis of the specified classification model and the processed object image by the server may refer to the related technology, and will not be elaborated in detail in the embodiment of the disclosure.

### (3) The server determines a keyword of the object included in the video image on the basis of the object category of the object included in the video image.

Since the object category of the object included in the video image may be of a person, may also be of a pet, and may further be of another object, and when the object category of the object included in the video image is of a person or a pet, the terminal is required to acquire a video segment where a person or pet with a specific identity is located in the monitoring video, so that the operation that the server determines the keyword of the object included in the video image on the basis of the object category of the object included in the video image may be implemented as follows: when the object category of the object included in the video image is of a person, the server performs face recognition on the object to obtain a face characteristic, then acquires a corresponding ID from stored correspondences between face characteristics and IDs on the basis of the face characteristic, and determines the ID as the keyword of the object included in the video image. When the object category of the object included in the video image is of a pet, the server acquires a pet tag on the basis of the video image, acquires a corresponding ID from stored correspondences between pet tags and IDs on the basis of the pet tag, and determines the ID as the keyword of the object included in the video image. When the object category of the object included in the video image is not of a person, and is also not of a pet, the server may directly determine the object category as the keyword of the object included in the video image.

It is to be noted that a process of performing face recognition on the object to obtain the face characteristic by the server may refer to the related technology, and will not be elaborated in detail in the embodiment of the disclosure.

It is also to be noted that the pet tag is configured to uniquely identify the pet, and the pet tag may be acquired by a two-dimensional code, barcode or another recognizable tag on the pet, which is not specifically limited in the embodiment of the disclosure.

For example, when the object category of the object included in the video image is of a person, the server performs face recognition on the object to obtain a face characteristic A and acquires an ID Yang Lele corresponding to A from the correspondences, as shown in Table 3, between face characteristics and IDs on the basis of the face characteristic A, and then the server may determine Yang Lele as the keyword of the object included in the video image.

**Table 3**

| Face characteristic | ID |
|---|---|
| A | Yang Lele |
| B | Guo Jie |
| ...... | ...... |

It is to be noted that description is made in the embodiment of the disclosure only with the correspondences, as shown in Table 3, between face characteristics and IDs, and Table 3 is not intended to form limits to the embodiment of the disclosure.

For another example, when the object category of the object included in the video image is of a pet, the server scans the two-dimensional code, barcode or another recognizable tag on the pet to acquire a pet tag ID1 on the basis of the video image and acquires an ID Doudou corresponding to ID1 from the correspondences, as shown in Table 4, between pet tags and IDs on the basis of the pet tag ID1, and then the server may determine Doudou as the keyword of the object included in the video image.

**Table 4**

| Pet tag | ID |
|---|---|
| ID1 | Doudou |
| ID2 | Huanhuan |
| ...... | ...... |

It is to be noted that description is made in the embodiment of the disclosure only with the correspondences, as shown in Table 4, between pet tags and IDs, and Table 4 is not intended to form limits to the embodiment of the disclosure.

Furthermore, before the server acquires the corresponding ID from the stored correspondences between face characteristics and IDs on the basis of the face characteristic, the server may receive first setting information sent by the terminal, the first setting information carrying the ID of the object and a face image of the object, and the server performs characteristic extraction on the face image to obtain the face characteristic of the object, and stores the face characteristic and the ID in the correspondences between face characteristics and IDs.

For example, the first setting information sent by the terminal carries the ID and the face image, the ID is Yang Lele, the server performs characteristic extraction on the face image to obtain a face characteristic A, and then the server may store A and Yang Lele in the correspondences, as shown in Table 3, between face characteristics and IDs.

Furthermore, before the server acquires the corresponding ID from the stored correspondences between pet tags and IDs on the basis of the pet tag, the server may receive second setting information sent by the terminal, the second setting information carrying the ID of the object and the pet tag of the object, and the server stores the pet tag and the ID in the correspondences between pet tags and IDs.

For example, the second setting information sent by the terminal carries the ID and the pet tag, the ID is Doudou, the pet tag is ID1, and then the server may store ID1 and Doudou in the correspondences, as shown in Table 4, between pet tags and IDs.

### (4) The server generates the index library on the basis of the keyword and the monitoring video.

Since the index library may store the correspondences between keywords and monitoring time points, and may also store the correspondences between keywords and video images, the operation that the server generates the index library on the basis of the keyword and the monitoring video may be implemented as follows: when the correspondences between keywords and monitoring time points are stored in the index library, the server determines the monitoring time point where the video image is located in the monitoring video, and stores the keyword and the monitoring time point in the correspondences between keywords and monitoring time points in the index library. When the correspondences between keywords and video images are stored in the index library, the server stores the keyword and the video image in the correspondences between keywords and video images in the index library.

Since the monitoring video includes the monitoring time points corresponding to each frame of video image in the monitoring video, when determining a video image where a certain object exists, the server may acquire a monitoring time point corresponding to the video image from the monitoring video with the video image, and then the server may store a keyword of the object and the monitoring time point in the correspondences between keywords and monitoring time points in the index library.

For example, the keyword of the object is Yang Lele, the server determines that a monitoring time point where a video image with Yang Lele is located is 2015/08/03-09:05:31, and then the server may store Yang Lele and 2015/08/03-09:05:31 in the correspondences, as shown in Table 1, between keywords and monitoring time points.

For another example, the keyword of the object is Yang Lele, the video image with Yang Lele in the monitoring video is 3.JPEG, and then the server may store Yang Lele and 3.JPEG in the correspondences, as shown in Table 2, between keywords and video images.

Manner 2: when the target object information includes the target image where the target object is located, the server determines a target category of the target object on the basis of the specified classification model and the target image, determines the target keyword of the target object on the basis of the target category and further determines the video segment where the target object is located in the monitoring video on the basis of the target keyword.

Wherein, when the server determines the target category of the target object on the basis of the specified classification model and the target image, the server may process a size of the target image into the preset size, and determine the target category of the target object included in the target image on the basis of the specified classification model and the processed target image.

It is to be noted that a process of determining the target category of the target object on the basis of the specified classification model and the processed target image by the server may refer to the related technology, and will not be elaborated in detail in the embodiment of the disclosure.

It is to be noted that a process of determining the target keyword of the target object on the basis of the target category by the server is similar to the determination process in Step (3) in manner 1 of Step 302, and will not be elaborated in the embodiment of the disclosure.

It is also to be noted that a process of determining the video segment where the target object is located in the monitoring video on the basis of the target keyword by the server is the same as the determination process in manner 2 of Step 302, and will not be elaborated in the embodiment of the disclosure.

Step 303: the server sends the video segment where the target object is located in the monitoring video to the terminal to enable the terminal to play the video segment.

It is to be noted that the terminal may play the video segment through a playing module in the terminal when playing the video segment, and of course, the terminal may also play the video segment through own playing application program. There are no limits specifically made in the embodiment of the disclosure.

In the embodiment of the disclosure, the server acquires the monitoring video, determines the object category of the object included in the video image of the monitoring video on the basis of the specified classification model, further determines the keyword of the object on the basis of the object category and stores the keyword and the monitoring time point corresponding to the keyword or the keyword and the video image corresponding to the keyword in the index library, and then the server determines the target keyword of the target object on the basis of the target object information carried in the playing request when receiving the playing request, acquires the at least one frame of video image where the target object is located in the monitoring video on the basis of the target keyword and the stored index library, forms the video segment where the target object is located in the monitoring video by the at least one frame of video image, and further sends the video segment to the terminal, so that the terminal may directly play the video segment where the target object exists in the monitoring video, and is not required to play video segments where objects other than the target object are located in the monitoring video, thereby avoiding the phenomenon that the user manually regulates playing of the monitoring video to view the video where the target object is located, simplifying the video playing operation, and improving video playing efficiency.

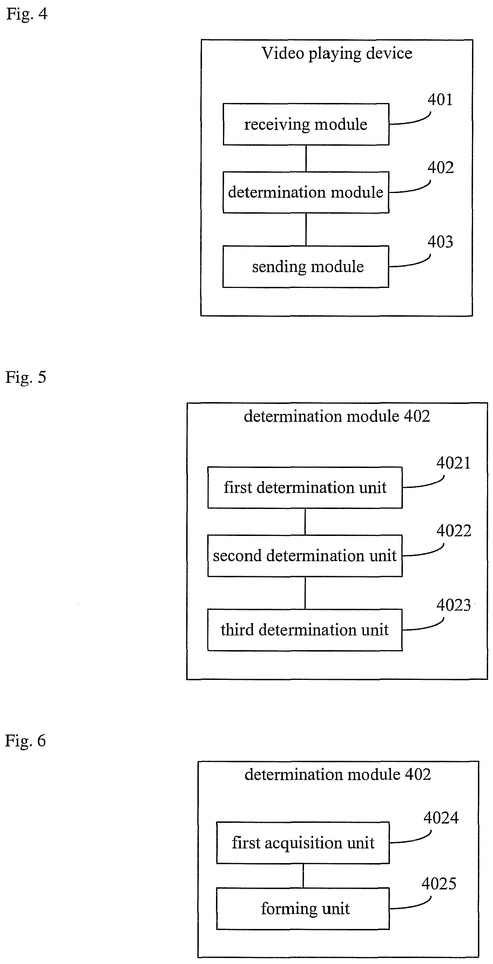

Fig. 4 is a block diagram of a video playing device according to an exemplary embodiment. Referring to Fig. 4, the device includes a receiving module 401, a determination module 402 and a sending module 403.

The receiving module 401 is configured to receive a playing request, the playing request carrying target object information and the target object information including a target image where a target object is located or a target keyword of the target object;
the determination module 402 is configured to determine a video segment where the target object is located in a monitoring video on the basis of the target object information; and
the sending module 403 is configured to send the video segment to a terminal to enable the terminal to play the video segment.

In another embodiment of the disclosure, referring to Fig. 5, the determination module 402 includes:
a first determination unit 4021, configured to, when the target object information includes the target image where the target object is located, determine a target category of the target object on the basis of a specified classification model and the target image;
a second determination unit 4022, configured to determine a target keyword of the target object on the basis of the target category; and
a third determination unit 4023, configured to determine the video segment where the target object is located in the monitoring video on the basis of the determined target keyword.

In another embodiment of the disclosure, referring to Fig. 6, the determination module 402 includes a first acquisition unit 4024 and a forming unit 4025.

The first acquisition unit 4024 is configured to acquire at least one frame of video image where the target object is located in the monitoring video on the basis of the target keyword corresponding to (or comprised in) the target object information and a stored index library; and
the forming unit 4025 is configured to form the video segment where the target object is located in the monitoring video from the at least one frame of video image.

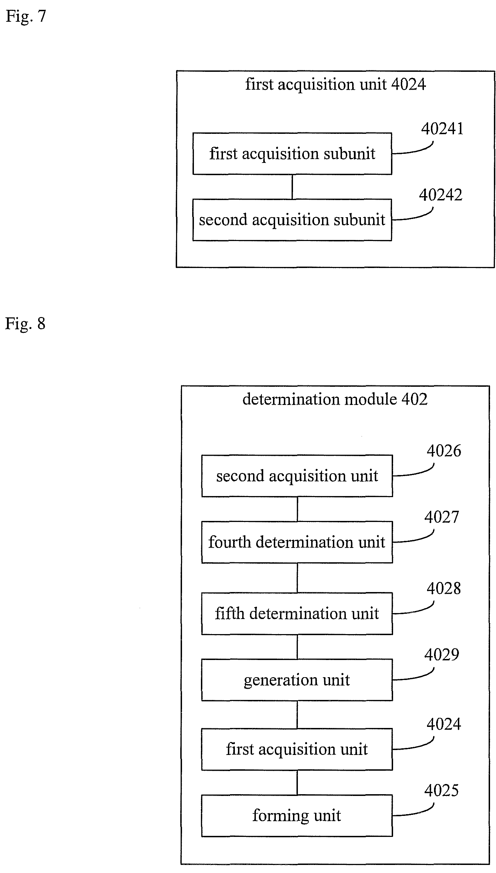

In another embodiment of the disclosure, referring to Fig. 7, the first acquisition unit 4024 includes a first acquisition subunit 40241 and a second acquisition subunit 40242.

The first acquisition subunit 40241 is configured to, when correspondences between keywords and monitoring time points are stored in the index library, acquire at least one monitoring time point from the correspondences between keywords and monitoring time points on the basis of the target keyword corresponding to (or comprised in) the target object information; and
the second acquisition subunit 40242 is configured to acquire the at least one frame of video image from the monitoring video on the basis of the at least one monitoring time point.

In another embodiment of the disclosure, the first acquisition unit 4024 includes:
a third acquisition subunit, configured to, when correspondences between keywords and video images are stored in the index library, acquire the at least one frame of video image from the correspondences between keywords and video images on the basis of the target keyword corresponding to (or comprised in) the target object information.

In another embodiment of the disclosure, referring to Fig. 8, the determination module 402 further includes a second acquisition unit 4026, a fourth determination unit 4027, a fifth determination unit 4028 and a generation unit 4029.

The second acquisition unit 4026 is configured to acquire the monitoring video sent by the intelligent camera equipment;
the fourth determination unit 4027 is configured to, for each frame of video image in the monitoring video, determine an object category of an object included in the video image on the basis of a specified classification model;
the fifth determination unit 4028 is configured to determine a keyword of the object included in the video image on the basis of the object category; and
the generation unit 4029 is configured to generate the index library on the basis of the determined keyword and the monitoring video.

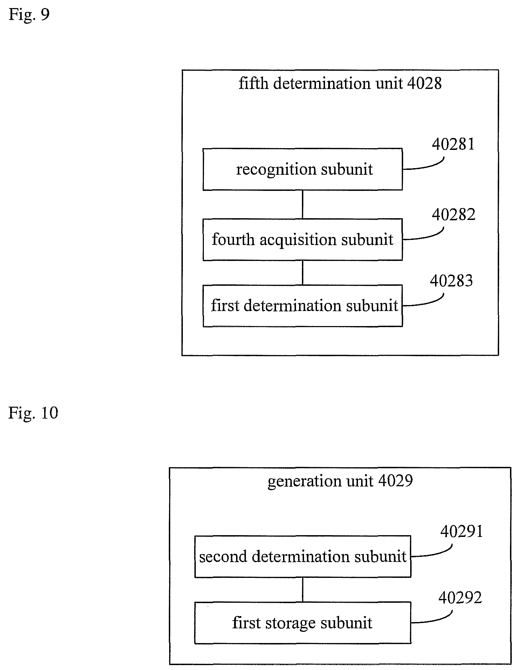

In another embodiment of the disclosure, referring to Fig. 9, the fifth determination unit 4028 includes a recognition subunit 40281, a fourth acquisition subunit 40282 and a first determination subunit 40283.

The recognition subunit 40281 is configured to, when the object category is of a person, perform face recognition on the object included in the video image to obtain a face characteristic;
the fourth acquisition subunit 40282 is configured to acquire a corresponding ID from stored correspondences between face characteristics and IDs on the basis of the face characteristic; and
the first determination subunit 40283 is configured to determine the ID as the keyword of the object included in the video image.

In another embodiment of the disclosure, referring to Fig. 10, the generation unit 4029 includes a second determination subunit 40291 and a first storage subunit 40292.

The second determination subunit 40291 is configured to determine a monitoring time point where the video image is located in the monitoring video; and
the first storage subunit 40292 is configured to store the keyword and the monitoring time point in the correspondences between keywords and monitoring time points in the index library.

In another embodiment of the disclosure, the generation unit 4029 includes:
a second storage subunit, configured to store the keyword and the video image in the correspondences between keywords and video images in the index library.

In the embodiment of the disclosure, a server receives the playing request, the playing request carrying the target object information, and the server determines the video segment where the target object is located in the monitoring video on the basis of the target object information, and sends the video segment to the terminal, so that the terminal may directly play the video segment where the target object exists in the monitoring video, and is not required to play video segments where objects other than the target object are located in the monitoring video, thereby avoiding the phenomenon that a user manually regulates playing of the monitoring video to view the video where the target object is located, simplifying the video playing operation, and improving video playing efficiency.

With respect to the devices in the above embodiments, the specific manners for performing operations for individual modules therein have been described in detail in the embodiments regarding the related methods, which will not be elaborated herein.

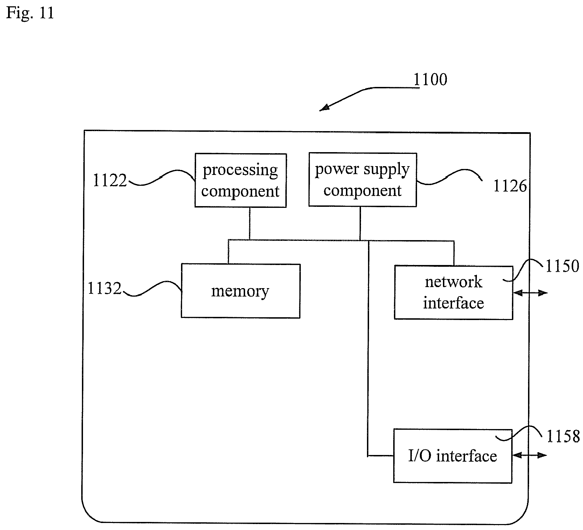

Fig. 11 is a block diagram of a video playing device 1100 according to an exemplary embodiment. For example, the device 1100 may be provided as a server. Referring to Fig. 11, the device 1100 includes a processing component 1122, which further includes one or more processors, and a memory resource represented by a memory 1132, configured to store instructions such as application programs executable by the processing component 1122. The application programs stored in the memory 1132 may include one or more than one module of which each corresponds to a set of instructions.

The device 1100 may further include a power supply component 1126 configured to execute power supply management of the device 1100, a wired or wireless network interface 1150 configured to connect the device 1100 to a network, and an Input/Output (I/O) interface 1158. The device 1100 may be operated on the basis of an operating system stored in the memory 1132, such as Windows ServerTM, Mac OS XTM, UnixTM, LinuxTM or FreeBSDTM.

In addition, the processing component 1122 is configured to execute the instructions to execute the following video playing method, the method including that:
a playing request is received, the playing request carrying target object information and the target object information including a target image where a target object is located or a target keyword of the target object;
a video segment where the target object is located in a monitoring video is determined on the basis of the target object information; and
the video segment where the target object is located in the monitoring video is sent to a terminal to enable the terminal to play the video segment.

In another embodiment of the disclosure, the step that the video segment where the target object is located in the monitoring video is determined on the basis of the target object information includes that:
when the target object information includes the target image where the target object is located, a target category of the target object is determined on the basis of a specified classification model and the target image;
the target keyword of the target object is determined on the basis of the target category; and
the video segment where the target object is located in the monitoring video is determined on the basis of the target keyword.

In another embodiment of the disclosure, the step that the video segment where the target object is located in the monitoring video is determined on the basis of the target object information includes that:
at least one frame of video image where the target object is located in the monitoring video is acquired on the basis of the target keyword corresponding to the target object information and a stored index library; and
the video segment where the target object is located in the monitoring video is formed by the at least one frame of video image.

In another embodiment of the disclosure, the step that the at least one frame of video image where the target object is located in the monitoring video is acquired on the basis of the target keyword corresponding to the target object information and the stored index library includes that:
when correspondences between keywords and monitoring time points are stored in the index library, at least one monitoring time point is acquired from the correspondences between keywords and monitoring time points on the basis of the target keyword corresponding to the target object information; and
the at least one frame of video image is acquired from the monitoring video on the basis of the at least one monitoring time point.

In another embodiment of the disclosure, the step that the at least one frame of video image where the target object is located in the monitoring video is acquired on the basis of the target keyword corresponding to the target object information and the stored index library includes that:
when correspondences between keywords and video images are stored in the index library, the at least one frame of video image is acquired from the correspondences between keywords and video images on the basis of the target keyword corresponding to the target object information.

In another embodiment of the disclosure, before the step that the at least one frame of video image where the target object is located in the monitoring video is acquired on the basis of the target keyword corresponding to the target object information and the stored index library, the method further includes that:
the monitoring video is acquired;
for each frame of video image in the monitoring video, an object category of an object included in the video image is determined on the basis of the specified classification model;
a keyword of the object included in the video image is determined on the basis of the object category; and
the index library is generated on the basis of the keyword and the monitoring video.

In another embodiment of the disclosure, the step that the keyword of the object included in the video image is determined on the basis of the object category includes that:
when the object category is of a person, face recognition is performed on the object included in the video image to obtain a face characteristic;
a corresponding ID is acquired from stored correspondences between face characteristics and IDs on the basis of the face characteristic; and
the ID is determined as the keyword of the object included in the video image.

In another embodiment of the disclosure, the step that the index library is generated on the basis of the keyword and the monitoring video includes that:
a monitoring time point where the video image is located is determined in the monitoring video; and
the keyword and the monitoring time point are stored in the correspondences between keywords and monitoring time points in the index library.

In another embodiment of the disclosure, the step that the index library is generated on the basis of the keyword and the monitoring video includes that:
the keyword and the video image are stored in the correspondences between keywords and video images in the index library.

In the embodiment of the disclosure, a server receives the playing request, the playing request carrying the target object information, and the server determines the video segment where the target object is located in the monitoring video on the basis of the target object information, and sends the video segment to the terminal, so that the terminal may directly play the video segment where the target object exists in the monitoring video, and is not required to play video segments where objects other than the target object are located in the monitoring video, thereby avoiding the phenomenon that a user manually regulates playing of the monitoring video to view the video where the target object is located, simplifying the video playing operation, and improving video playing efficiency.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

### INDUSTRIAL APPLICABILITY

In the embodiment of the disclosure, a server receives the playing request, the playing request carrying the target object information, and the server determines the video segment where the target object is located in the monitoring video on the basis of the target object information, and sends the video segment to the terminal, so that the terminal may directly play the video segment where the target object exists in the monitoring video, and is not required to play video segments where objects other than the target object are located in the monitoring video, thereby avoiding the phenomenon that a user manually regulates playing of the monitoring video to view the video where the target object is located, simplifying the video playing operation, and improving video playing efficiency.

## Claims

1. A video playing method, **characterized in that**, the method comprises:
receiving (201) a playing request, the playing request carrying target object information, the target object information comprising a target image where a target object is located or a first target keyword of the target object;
determining (202) a video segment where the target object is located in a video on the basis of the target object information; and
sending (203) the video segment to a terminal to enable the terminal to play the video segment.

2. The method according to claim 1, wherein said determining of the video segment comprises:
when the target object information comprises the target image where the target object is located, determining a target category of the target object on the basis of a specified classification model and the target image;
determining a second target keyword of the target object on the basis of the target category; and
determining the video segment where the target object is located in the video on the basis of the second target keyword.

3. The method according to claim 1, wherein said determining of the video segment comprises:
acquiring at least one frame of video image where the target object is located in the video on the basis of the first target keyword corresponding to the target object information and a stored index library; and
forming the video segment where the target object is located in the video from the at least one frame of video image.

4. The method according to claim 3, wherein said acquiring of the at least one frame of video image where the target object is located in the video comprises:
when correspondences between keywords and monitoring time points are stored in the index library, acquiring at least one monitoring time point from the correspondences between keywords and monitoring time points on the basis of the first target keyword corresponding to the target object information; and
acquiring the at least one frame of video image from the video on the basis of the at least one monitoring time point.

5. The method according to claim 3, wherein the acquiring of the at least one frame of video image where the target object is located comprises:
when correspondences between keywords and video images are stored in the index library, acquiring the at least one frame of video image from the correspondences between keywords and video images on the basis of the first target keyword corresponding to the target object information.

6. The method according to any one of claims 3 to 5, further comprising:
before acquiring the at least one frame of video image where the target object is located in the video on the basis of the first target keyword corresponding to the target object information and the stored index library,
acquiring the video;
for each frame of video image in the video, determining an object category of an object comprised in the video image on the basis of a specified classification model;
determining a keyword of the object comprised in the video image on the basis of the object category; and
generating the index library on the basis of the keyword and the video.

7. The method according to claim 6, wherein said determining of the keyword of the object comprised in the video image on the basis of the object category comprises:
when the object category is of a person, performing face recognition on the object comprised in the video image to obtain a face characteristic;
acquiring a corresponding Identity (ID) from stored correspondences between face characteristics and IDs on the basis of the face characteristic; and
determining the ID as the keyword of the object comprised in the video image.

8. The method according to claim 6 or 7, wherein said generating of the index library on the basis of the keyword and the video comprises:
determining a monitoring time point where the video image is located in the video; and
storing the keyword and the monitoring time point in the correspondences between keywords and monitoring time points in the index library.

9. The method according to any one of claims 6 to 8, wherein said generating of the index library on the basis of the keyword and the video comprises:
storing the keyword and the video image in the correspondences between keywords and video images in the index library.

10. A video playing device, **characterized in that**, the device comprises:
a receiving module (401), configured to receive a playing request, the playing request carrying target object information, said target object information comprising a target image where a target object is located or a first target keyword of the target object;
a determination module (402), configured to determine a video segment where the target object is located in a video on the basis of the target object information; and
a sending module (403), configured to send the video segment to a terminal to enable the terminal to play the video segment.

11. The device according to claim 10, wherein the determination module (402) comprises:
a first determination unit (4021), configured to, when the target object information comprises the target image where the target object is located, determine a target category of the target object on the basis of a specified classification model and the target image;
a second determination unit (4022), configured to determine a second target keyword of the target object on the basis of the target category; and
a third determination unit (4023), configured to determine the video segment where the target object is located in the video on the basis of the second target keyword.

12. The device according to claim 10, wherein the determination module (402) comprises:
a first acquisition unit (4024), configured to acquire at least one frame of video image where the target object is located in the video on the basis of the first target keyword corresponding to the target object information and a stored index library; and
a forming unit (4025), configured to form the video segment where the target object is located in the video from the at least one frame of video image.

13. A computer program including instructions for executing the steps of a video playing method according to any one of claims 1 to 9 when said program is executed by a computer.

14. A recording medium readable by a computer and having recorded thereon a computer program including instructions for executing the steps of a video playing method according to any one of claims 1 to 9.
